# EUROPÄISCHE PATENTANMELDUNG

(11) **EP 1 922 963 A1**
(43) Veröffentlichungstag der Anmeldung: **21.05.2008**
(21) Anmeldenummer: 06023798.9
(22) Anmeldetag: 16.11.2006
(51) Int. Cl.: A47J 31/40, A47J 31/00

(54) **Vorrichtung und Verfahren zur Extraktion eines Heissgetränks**

(71) Anmelder: Petervin S.A., L-1233 Luxembourg (LU)
(72) Erfinder: Illy, Francesco, 7516 Maloja (CH); Spugnoli, Paolo, 50100 Firenze (IT); Parenti, Alessandro, 50143 Firenze (IT)
(74) Vertreter: Liebetanz, Michael

(57) **Zusammenfassung**

Ein Verfahren zur Herstellung eines Heissgetränkes, insbesondere eines Kaffeegetränks oder eines Teegetränks, wobei Aromastoffe aus einem Aromaträger, der aus geröstetem Kaffee oder getrocknetem Tee hergestellt wird, mittels Wasser oder Wasserdampf extrahiert werden, weist mehrere Schritte auf:
- In einem ersten Schritt (100) wird eine vorbestimmte Menge des Aromaträgers, in welchem die Aromastoffe enthalten sind, in eine fluiddicht verschliessbare Extraktionskammer gegeben.
- In einem nachfolgenden Schritt (104) wird Wasser oder Wasserdampf zur Extraktion von Aromastoffen aus dem Aromaträger in die Extraktionskammer gegeben.
- In einem nachfolgenden Schritt (106) fliesst das extrahierte Getränk aus der Extraktionskammer aus.
- Vor dem Schritt (104) des Einbringens von Wasser oder Wasserdampf in die Extraktionskammer, wird ein Schritt (102) des Einbringens von unter Druck stehendem Gas in die Extraktionskammer ausgeführt. Dabei steigt der Innendruck in der Extraktionskammer an. Aufgrund des Einbringens des unter Druck stehenden Gases kann sich besonders guter Schaum bzw. Crema auf dem Getränk, insbesondere auf dem Kaffeegetränk bilden.

## Beschreibung

### Technisches Gebiet der Erfindung

Die vorliegende Erfindung betrifft ein Verfahren und eine Vorrichtung zur Extraktion von Aromastoffen aus einem beliebigen Aromaträger, wie geröstetem Kaffee und/oder getrocknetem Tee, für die Herstellung eines Heissgetränks gemäss den Merkmalen des Oberbegriffs des Anspruchs 1 und 8.

### Stand der Technik

Aus dem Stand der Technik sind eine Vielzahl von Vorrichtungen und Verfahren zur Extraktion der Aromastoffe aus Kaffee bzw. Tee bekannt. Bei einer solchen Extraktion werden die Aromastoffe von Kaffee mittels Wasser extrahiert. Das mit den Aromastoffen angereicherte Wasser wird mittels eines Filters gefiltert. Es resultiert ein Kaffee- oder ein Teegetränk.

Beispielsweise zeigt EP 0 468 080 eine solche Vorrichtung zur Extraktion der Aromastoffe von Kaffee, welcher sich in einer Kapsel befindet. Über eine Einstechnadel, welche in die Oberseite der Kapsel eindringt, wird ein Gemisch aus Wasser und Luft in die Kapsel eingeblasen. Aufgrund des ansteigenden Druckes in der Kapsel reisst die Unterseite der Kapsel auf und das Kaffeegetränk kann aus der Kapsel ausfliessen.

Weitere Druckschriften, wie beispielsweise die WO 86/05670, zeigen eine weitere Vorrichtung zur Extraktion eines Kaffeegetränkes aus Kaffeepulver. Dabei wird Luft in eine Kammer eingeblasen, in welcher sich Kaffee und heisses Wasser zusammen befinden.

Nachteilig beim genannten Stand der Technik ist die teilweise mangelnde Entwicklung der sehr komplexen Aromastoffe. Die Konsumenten der heutigen Zeit schätzen ein authentisches Kaffeegetränk oder Teegetränk, welches das komplexe Aroma des Kaffeepulvers bzw. der Teeblätter im extrahierten Getränk wiedergibt. E-bendiese Aromastoffe können bei Vorrichtungen des Standes der Technik teilweise nur ungenügend extrahiert werden.

Ein weiterer Nachteil von Vorrichtungen des Standes der Technik ist, dass die Aromastoffe nicht in definierter Art und Weise aus dem Kaffeepulver extrahiert werden. Der Benutzer ist nicht in der Lage, einzelne Parameter zu beeinflussen. Auch dies führt zu einer mangelnden Entfaltung vieler Aromastoffe, welche sich im Kaffee befinden. Zudem wird der Geschmack des Benutzers nicht berücksichtigt.

Ein weiterer Nachteil betrifft die vielfach mangelnde Qualität des Schaums (Crema). Viele Vorrichtungen des Standes der Technik erzeugen zwar einen Schaum auf dem Kaffeegetränk, allerdings löst sich der Schaum dann schon nach sehr kurzer Zeit wieder auf. Ein schöner Schaum, welcher zudem auch noch lange anhält, wird von den Konsumenten besonders geschätzt.

### Darstellung der Erfindung

Ausgehend von diesem Stand der Technik liegt der Erfindung die Aufgabe zugrunde, eine Vorrichtung und ein Verfahren anzugeben, welches die Nachteile des Standes der Technik überwindet. Insbesondere sollen mit der erfindungsgemässen Vorrichtung bzw. mit dem erfindungsgemässen Verfahren die Aromastoffe in einer definierten Art und Weise aus dem Aromaträger, wie beispielsweise Kaffeepulver oder Teeblättern, extrahiert werden. Zudem soll ein möglichst dichter und lang anhaltender Schaum hergestellt werden können.

Diese Aufgabe löst ein Verfahren mit den Merkmalen des Patentanspruchs 1 bzw. eine Vorrichtung mit den Merkmalen des Patentanspruches 10. Vorteilhafte Ausgestaltungen der Erfindung sind in den abhängigen Ansprüchen angegeben.

Demgemäss weist ein Verfahren zur Herstellung eines Heissgetränkes, insbesondere eines Kaffeegetränks oder eines Teegetränks, wobei Aromastoffe aus einem Aromaträger, der insbesondere aus geröstetem Kaffee oder getrocknetem Tee hergestellt wird, mittels Wasser oder Wasserdampf extrahiert werden, mehrere Schritte auf:
- In einem ersten Schritt wird eine vorbestimmte Menge des Aromaträgers, in welchem die Aromastoffe enthalten sind, in eine fluiddicht verschliessbare Extraktionskammer gegeben.
- In einem nachfolgenden Schritt wird Wasser oder Wasserdampf zur Extraktion von Aromastoffen aus dem Aromaträger in die Extraktionskammer gegeben.
- In einem nachfolgenden Schritt fliesst das extrahierte Getränk aus der Extraktionskammer aus.
- Vor dem Schritt des Einbringens von Wasser oder Wasserdampf in die Extraktionskammer, wird ein Schritt des Einbringens von unter Druck stehendem Gas in die Extraktionskammer ausgeführt. Dabei steigt der Innendruck in der Extraktionskammer an.

Aufgrund des Einbringens des unter Druck stehenden Gases kann sich besonders guter Schaum bzw. Crema auf dem Getränk, insbesondere auf dem Kaffeegetränk bilden.

Vorzugsweise wird der durch das Gas bereitgestellte Innendruck in der Extraktionskammer für eine vorbestimmte Wartezeit gehalten, bevor das Wasser oder der Wasserdampf in die Extraktionskammer eingebracht wird.

Dies fördert die Entwicklung der Aromastoffe in einer besonders guten Art und Weise. Die Anpassung der Wartezeit, erlaubt dem Benutzer die Herstellung eines Getränks nach seinem Geschmack.

Weitere vorteilhafte Ausführungsformen des Verfahrens sind in den Unteransprüchen gekennzeichnet.

Die erfindungsgemässe Vorrichtung zur Herstellung eines Heissgetränks, insbesondere eines Kaffeegetränks oder eines Teegetränks, umfasst eine Extraktionskammer zur Extraktion von Aromastoffen aus einem Aromaträger, der insbesondere aus geröstetem Kaffee oder getrocknetem Tee hergestellt wird, mittels Wasser oder Wasserdampf, und einen Filter zur Filterung des durch die Extraktion entstehenden Getränks. Die Vorrichtung ist derart ausgestaltet, dass eine Druckgas liefernde Einrichtung vorgesehen ist, mit der ein unter Druck stehendes Gas in die mit dem Aromaträger befüllte Extraktionskammer einleitbar ist.

Weitere vorteilhafte Ausführungsformen der Vorrichtung sind in den Unteransprüchen gekennzeichnet.

### Kurze Beschreibung der Zeichnung

Die Erfindung wird im folgenden anhand der Zeichnung näher beschrieben. Es zeigen:
- Fig. 1a: ein Flussdiagramm des erfindungsgemässen Verfahrens;
- Fig. 1b: ein Flussdiagramm des Verfahrens nach Figur 1a mit weiteren optionalen Schritten;
- Fig. 2: einen Längsschnitt durch ein erstes Ausführungsbeispiel einer Vorrichtung gemäss der vorliegenden Erfindung;
- Fig. 3: einen Längsschnitt durch das Ausführungsbeispiel nach Figur 2;
- Fig. 4: einen Längsschnitt durch ein zweites Ausführungsbeispiel einer Vorrichtung gemäss der vorliegenden Erfindung vor dem ersten Verfahrensschritt;
- Fig. 5: einen Längsschnitt durch das Ausführungsbeispiel nach Figur 4 nach dem Einbringen von Gas;
- Fig. 6: einen Längsschnitt durch das Ausführungsbeispiel nach Figur 5 nach dem Einbringen von Gas und Wasser; und
- Fig. 7: einen Längsschnitt durch das Ausführungsbeispiel nach Figur 6 während der Extraktion.

### Beschreibung eines Ausführungsbeispiels

Die erfindungsgemässe Vorrichtung bzw. das erfindungsgemässe Verfahren dienen der Extraktion von Aromastoffen aus einem Aromaträger, wie geröstetem Kaffee oder getrocknetem Tee. Hierbei resultiert ein Kaffeegetränk bzw. ein Teegetränk. Typischerweise liegt der Kaffee bzw. der Tee in der Form eines Schüttgutes, Pulvers, Granulates oder in gepresster Form als Tablette vor. Insbesondere ist das Pulver ein Resultat von gemahlenen und vorgängig gerösteten Kaffeebohnen. Aus Gründen der Einfachheit wird in der vorliegenden Beschreibung nur noch von Kaffee bzw. Kaffeegetränk gesprochen, wobei diese Formulierung im Sinne der vorliegenden Erfindung auch Tee einschliesst.

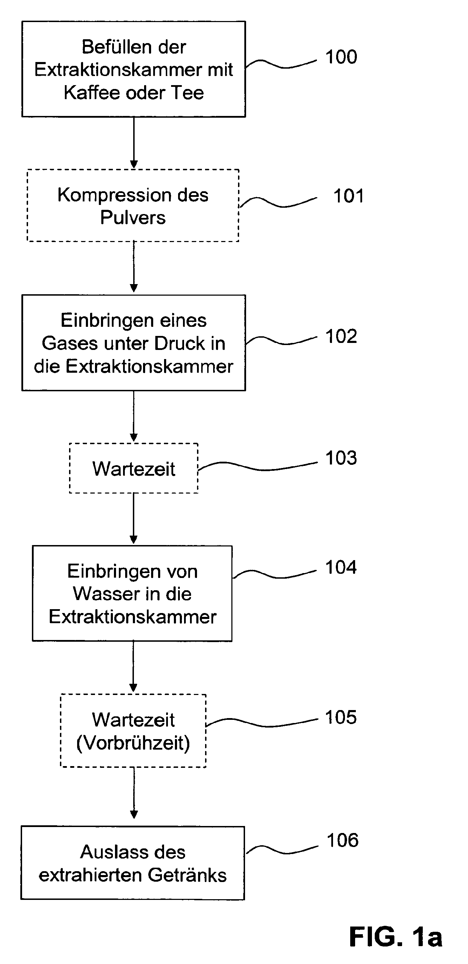

Die Extraktion der Aromastoffe aus dem Kaffeepulver zur Herstellung eines Getränks wird nach dem Verfahren gemäss der vorliegenden Erfindung durchgeführt. Die Figur 1a zeigt ein vereinfachtes Flussdiagramm des erfindungsgemässen Verfahrens.

In einem ersten Schritt 100 wird eine Extraktionskammer 1 einer Vorrichtung zur Herstellung von Kaffee mit Kaffeepulver befüllt. Das Kaffeepulver kann dabei direkt in die Extraktionskammer 1 eingefüllt werden. Alternativ kann sich das Kaffeepulver in einer Kapsel oder einem Sachet befinden. Hierbei wird das Druckgas direkt in die Kapsel oder in das Sachet eingebracht.

In einem weiteren optionalen Schritt 101 wird das sich in der Extraktionskammer 1 befindliche Pulver verdichtet oder komprimiert. Der Grad der Verdichtung bzw. Kompression ist ein Parameter der die Bildung eines guten Schaums (Crema) beeinflusst. Der Grad der Pressung bzw. Verdichtung ist ein Anpassungsparameter bezüglich den Eigenschaften des Getränks. Eine Kompression hohen Grades bewirkt eine langsame Extraktion. Hier resultiert beispielsweise ein Ristretto. Eine Kompression tiefen Grades oder keine Kompression bewirkt eine schnelle Extraktion. Hierbei entsteht ein Kaffee Creme. Verdichten bedeutet, dass das Volumen des Pulvers unter das Schüttvolumen des Pulvers verdichtet wird.

In einem weiteren Schritt 102 wird ein unter Druck stehendes Gas in die Extraktionskammer 1 eingebracht. Vorzugsweise soll dabei ein Druck von 0.1 bis 16 bar in der Extraktionskammer 1 erreicht werden. Besonders bevorzugt ist der Druck zwischen 0.2 und 10 bar. Dabei resultiert eine Mischung aus dem Pulver in der Extraktionskammer 1 und aus dem Gas.

Eine Variation des Innendruckes in der Extraktionskammer 1 verändert das Aroma des Kaffeegetränkes. Der Benutzer kann demnach mit der Veränderung bzw. mit der individuellen Einstellung des Innendruckes ein individuelles Kaffeegetränk herstellen, welches seinem Geschmack entspricht. Zudem hat das Einbringen eines Gases unter Druck den Vorteil, dass sich bei der nachfolgenden Extraktion ein besonders guter Schaum bildet.

Weiter ist es auch möglich, die Vorrichtung derart auszugestalten, dass die optimalen Parameter schon voreingestellt sind. Der Benutzer kann hierbei dann keinen direkten Einfluss auf das Getränk nehmen.

Als Gas können beispielsweise Luft, inerte Gase, wie Kohlenstoffdioxid (CO₂) oder Stickstoff (N₂) oder Argon (Ar) eingesetzt werden. Das Gas kann in einer vielfältigen Art und Weise unter Druck gesetzt werden. Sofern Luft als Gas verwendet wird, kann eine unten beschriebene Vorrichtung oder eine Pumpe zur Erzeugung des Druckes vorgesehen werden. Dies ist eine sehr kostengünstige Lösung. Zudem ist es auch möglich, dass das Gas in einer Gasflasche oder Kartusche gespeichert ist. Über einen Druckminderer kann der gewünschte Druck eingestellt werden.

In einem weiteren Schritt 103 wird der Innendruck über eine definierte Wartezeit gehalten. Die Wartezeit ist vorzugsweise zwischen 0.1 und 5 Sekunden. Besonders bevorzugt wird eine Wartezeit von 0.5 bis 3 Sekunden. Vorzugsweise kann der Benutzer die Wartezeit oder Verweilzeit ebenfalls selbst wählen und dadurch das Aroma des resultierenden Kaffeegetränks weiter beeinflussen. Die Verweilzeit ist demnach ein weiterer Parameter zur Beeinflussung des Aromas. Wartezeiten über 10 Sekunden sind möglich, werden aber vom Konsumenten nicht geschätzt.

Die Wartezeit ist optional. Alternativ kann dieser Schritt übersprungen werden. Das heisst in diesem Fall, dass die Wartezeit 0 Sekunden lang ist, und dass nach dem Erreichen des gewünschten Innendruckes das heisse Wasser oder der Wasserdampf gemäss dem weiteren Schritt 104 unverzüglich in die Extraktionskammer geleitet wird.

Im weiteren Schritt 104 wird heisses Wasser oder Wasserdampf in die unter Druck stehende Extraktionskammer 1 geleitet. Das Wasser kann an diversen Stellen in die Extraktionskammer 1 geleitet werden. Der Druck in der Extraktionskammer 1 wird dadurch weiter erhöht. Vorzugsweise beträgt der Innendruck in der Extraktionskammer 1 nach dem Einleiten des Wassers bzw. des Wasserdampfes zwischen 5 und 50 bar. Besonders bevorzugt wird ein Innendruck zwischen 7 und 18 bar.

Durch diese weitere Druckerhöhung können die Aromastoffe aus dem Kaffee besonders gut extrahiert werden. Es wurde in Versuchen der Anmelderin festgestellt, dass bisher unbekannte Aromastoffe durch Kaffeetester erkannt werden können.

In einem weiteren Schritt 105 wird der Innendruck über eine definierte Wartezeit bzw. Vorbrühzeit gehalten. Die Wartezeit ist vorzugsweise zwischen 0.1 und 50 Sekunden. Besonders bevorzugt wird eine Wartezeit von 3 bis 15 Sekunden. Vorzugsweise kann der Benutzer die Wartezeit oder Verweilzeit ebenfalls selbst wählen und dadurch das Aroma des resultierenden Kaffeegetränks weiter beeinflussen. Die Vorbrühzeit ist demnach ein weiterer Parameter zur Beeinflussung des Aromas. Wartezeiten über 50 Sekunden sind möglich, werden aber vom Konsumenten nicht geschätzt.

Die Wartezeit bzw. Vorbrühzeit ist optional. Alternativ kann dieser Schritt übersprungen werden. Das heisst in diesem Fall, dass die Wartezeit 0 Sekunden lang ist.

In einem weiteren Schritt 106 wird das extrahierte Getränk aus der Extraktionskammer 1 durch Öffnen bzw. Betätigen eines Ventils ausgelassen. Die plötzlichen Öffnung des Ventils und die daraus folgenden Expansion haben einen positiven Einfluss auf die Qualität und auf die Schaumbildung des Kaffees. Dabei resultiert ein Kaffeegetränk von besonders guter Qualität. Insbesondere weist das Getränk einen schönen und lang anhaltenden Schaum auf.

Das erfindungsgemässe Verfahren kann mit einer unten beschriebenen Vorrichtung gemäss einem Ausführungsbeispiel ausgeführt werden. Das Verfahren kann aber auch mit alternativen Vorrichtungen durchgeführt werden und ist nicht auf das untenstehende Ausführungsbeispiel limitiert.

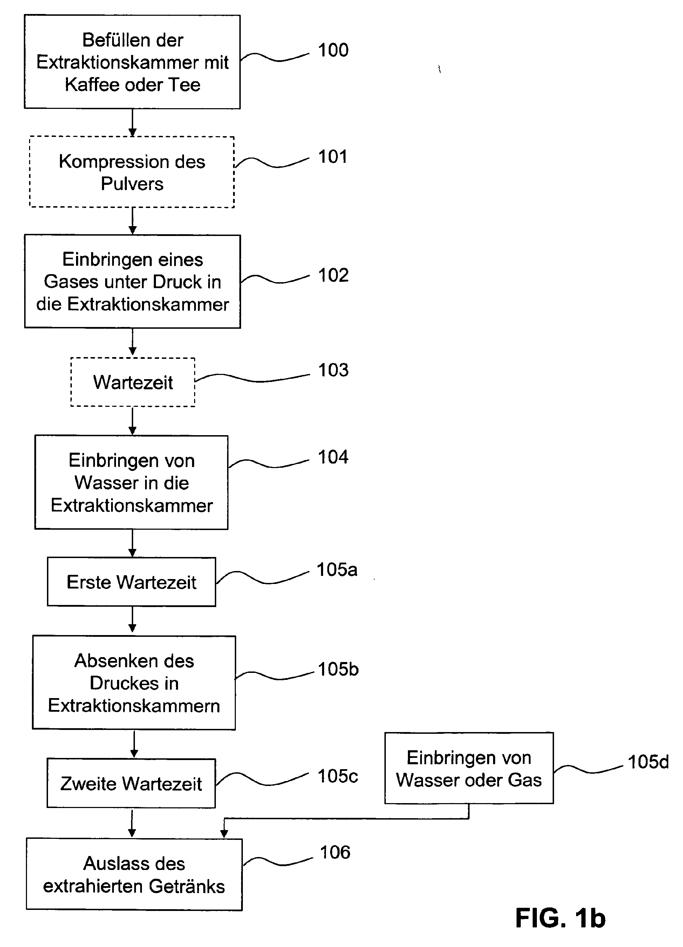

Figur 1b zeigt das erfindungsgemässe Verfahren mit optionalen Schritten erste Wartezeit 105a, Absenken des Druckes in der Extraktionskammer 105b, zweite Wartezeit 105c und Einbringen von Wasser oder Gas 105d. Mit anderen Worten kann auch gesagt werden, dass der Schritt der Wartezeit 105 oder Vorbrühzeit mit den genannten Schritten ersetzt wird. Insbesondere kann der Schritt des Einbringens von Wasser oder Gas 105d auch in Alleinstellung durchgeführt werden.

Der Schritt der ersten Wartezeit 105a wird nach dem Schritt des Einbringens von Wasser oder Wasserdampf in die Extraktionskammer 104 ausgeführt. Die erste Wartezeit ist vorzugsweise zwischen 0.1 und 50 Sekunden. Besonders bevorzugt wird eine Wartezeit von 1 bis 15 Sekunden.

Im Schritt Absenken des Druckes 105b wird das Ventil, über welches das extrahierte Getränk aus der Extraktionskammer 1 ausfliessen kann, für eine kurze Zeit geöffnet. Diese Öffnungszeit ist vorzugsweise zwischen 0.05 und 1,5 Sekunden. Besonders bevorzugt ist die Öffnungszeit zwischen 0.05 und 0.5 Sekunden.

Durch das Öffnen des Ventils wird der Druck in der Kammer abgesenkt, beispielweise um 10% bis 20% des Innendruckes, also beispielsweise von 16 bar auf 14 bar. Dabei kann das Ventil teilweise über einen eher längeren Zeitraum geöffnet werden, was als Teilöffnung bezeichnet werden kann, oder das Ventil kann über einen eher kurzen Zeitraum vollständig geöffnet werden, was als Vollöffnung bezeichnet werden kann.

Vor dem Schritt des Auslassens des extrahierten Getränks 106 wird der Schritt der zweiten Wartezeit 105c, welche auch als Vorbrühzeit bezeichnet werden kann, ausgeführt. Hierbei wird der Innendruck über eine definierte Wartezeit gehalten. Die Wartezeit ist vorzugsweise zwischen 0.1 und 50 Sekunden. Besonders bevorzugt wird eine Wartezeit von 3 bis 15 Sekunden.

Im anschliessenden Schritt 106 wird das Getränk aus der Extraktionskammer ausgelassen. Hierbei wird das Ventil vorzugsweise vollständig geöffnet.

Alternativ kann vor oder während dem Schritt des Auslassens des extrahierten Getränks 106 zusätzliches Wasser, Wasserdampf oder Gas in die Extraktionskammer 1 zugeführt werden. Das heisst also, dass während dem Zeitraum, bei welchem das Ventil der Extraktionskammer 1 offen ist, die genannten zusätzlichen Fluide in die Extraktionskammer 1 nachfliessen können.

Alternativ kann der Schritt des Einbringens von Wasser oder Gas 105d auch vor oder während dem Schritt der zweiten Wartezeit 105c erfolgen.

Der Schritt des Einbringens von Wasser oder Gas 105d kann auch bei dem in Figur 1a beschriebenem Verfahren angewandt werden. Hierbei kann dieser Schritt 105d vor oder während der Wartezeit 105 bzw. vor oder während dem Schritt des Auslassens des extrahierten Getränks 106 ausgeführt werden.

Alle genannten Schritte des erfindungsgemässen Verfahrens können in beliebiger und sinnvoller Reihenfolge in Alleinstellung miteinander kombiniert werden. Ebenfalls ist es denkbar, dass ein Verfahrensschritt oder mehrere Verfahrensschritte der beschriebenen Ausführungsbeispiele nicht ausgeführt werden.

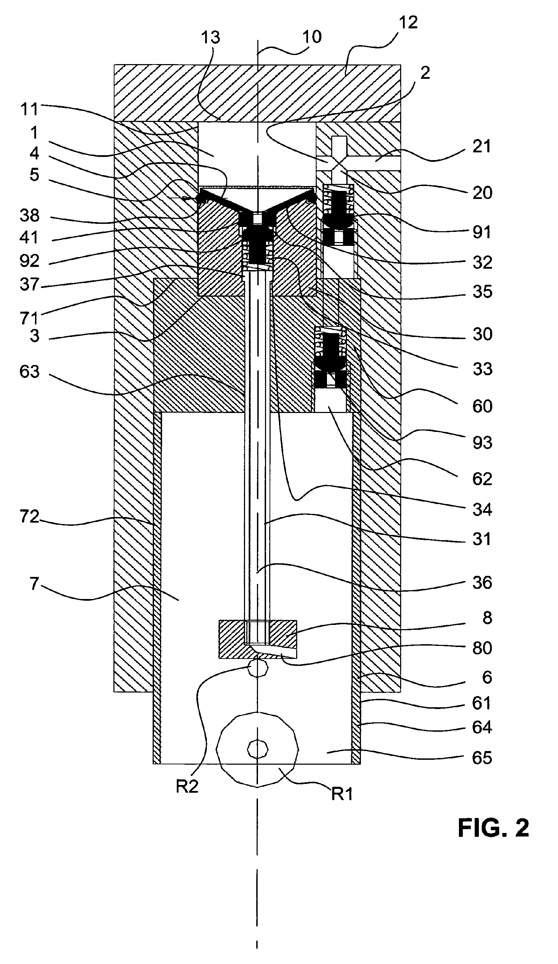

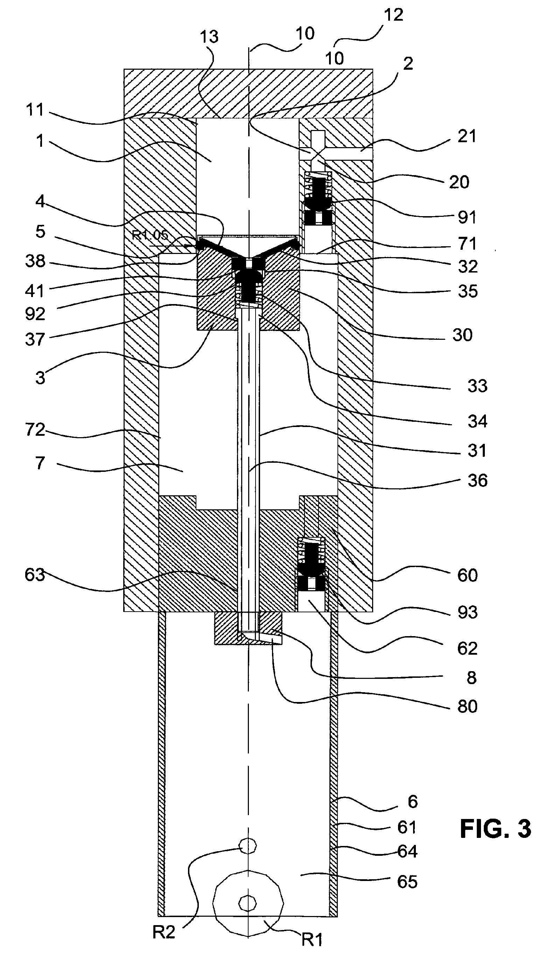

Figuren 2 und 3 zeigen in einer schematischen Schnittansicht eine mögliche Ausgestaltung eines Teils einer erfindungsgemässen Vorrichtung nach einem Ausführungsbeispiel.

Der in den Figur 2 und 3 schematisch dargestellte Teil einer Vorrichtung zur Extraktion der Aromastoffe aus Kaffee zur Herstellung eines Kaffeegetränks ist im wesentlichen der Teil der Vorrichtung, in welchem die Extraktion statt findet. Geräte zum erhitzen von Wasser bzw. zum Erzeugen von heissem Wasser, wie beispielsweise ein Boiler, Wassertank, Bedienelemente etc. sind dem Fachmann bekannt, so dass eine Beschreibung dieser Elemente überflüssig ist.

Eine Extraktionskammer 1 dient zur Aufnahme des Kaffeepulvers. Vorzugsweise ist die Extraktionskammer 1 kreiszylindrisch mit einer Seitenwand 11 ausgestaltet und weist eine Mittelachse 10 auf. Ferner wird eine obere Öffnung 13 der Extraktionskammer 1 im oberen Bereich durch einen Deckel 12 abgeschlossen. Im oberen Bereich weist die Extraktionskammer 1 einen Einlass 2 auf, durch welchen die Fluide in die Extraktionskammer 1 eingebracht werden können. Der Einlass 2 ist im vorliegenden Ausführungsbeispiel als kombinierter Einlass 2 ausgestaltet. Das heisst, dass sich über den kombinierten Einlass 2 sowohl Gase als auch Flüssigkeiten in die Extraktionskammer 1 einleiten lassen. Hierfür weist der Einlass 2 im wesentlichen zwei Kanäle auf, nämlich einen Gaskanal 20 und einen Flüssigkeitskanal 21.

Über den Gaskanal 20 kann ein Gas unter Druck in die Extraktionskammer 1 eingeleitet werden. Der Gaskanal 20 ist zudem mit einem Rückschlagventil 91 versehen. Dabei verhindert das Rückschlagventil 91, dass ein Fluid von der Extraktionskammer 1 durch den Gaskanal 20 austreten kann.

Über den Flüssigkeitskanal 21 kann heisses Wasser oder heisser Wasserdampf in die Extraktionskammer 1 geleitet werden. Hierfür ist der Flüssigkeitskanal 21 mit einem entsprechenden Mittel, wie beispielsweise mit einem Boiler, verbunden. Der Boiler erhitzt das Wasser, so dass Wasserdampf oder heisses Wasser entsteht. Eine Mittel, wie beispielsweise eine Pumpe, fördert das Wasser oder den Wasserdampf in die Extraktionskammer. Zudem weist der Gaskanal 21 ein nicht dargestelltes Element auf, welches einen Rückfluss aus der Extraktionskammer 1 verhindert. Dies kann beispielsweise ein Rückschlagventil im Gaskanal 21 oder ein Rückschlagventil beim Boiler oder einer Wasserpumpe sein.

Alternativ können der Gaskanal 20 und der Flüssigkeitskanal 21 auch getrennt sein. In diesem Falle weist die Extraktionskammer zwei Einlässe auf, welche beliebig angeordnet sein können. Insbesondere können die beiden Einlässe auf der gleichen Höhe und einander gegenüberliegend angeordnet sein.

In der Extraktionskammer 1 ist zudem ein Auslasszylinder 3 angeordnet. Die Extraktionskammer ist demnach mittels der Seitenwand 11, dem Deckel 12 und dem Auslasszylinder 3 fluiddicht gegenüber der Umgebung ausgestaltet.

Der Auslasszylinder 3 ist in Richtung der Mittelachse 10 gegenüber der Extraktionskammer 1 bewegbar. Der Auslasszylinder 3 umfasst im wesentlichen einen Kolben 30 und eine Kolbenstange 31. Der Kolben 30 weist auf seiner der Extraktionskammer 1 zugewandten Stirnfläche eine sich konisch erstreckende Ausnehmung 32 auf. Die konische Ausnehmung 32 geht in einen Auslasskanal 33 über, welcher sich als kreiszylindrische Öffnung entlang der Mittelachse 10 erstreckt. Im unteren Bereich des Auslasskanals 33 ragt die Kolbenstange 31 in den Kolben 30 ein. Hierbei verkleinert sich der Durchmesser des Auslasskanals 33, so dass ein Absatz 34 entsteht, auf welchem die Kolbenstange 31 aufliegen kann. Andere Verbindungsarten, wie beispielsweise eine Schraubverbindung, in welcher die Kolbenstange 31 in den Kolben 30 eingeschraubt wird, sind natürlich auch denkbar. Im oberen Bereich weist der Auslasskanal 33 ein Gewinde 35 auf. Durch Drehung an einem schematisch dargestellten Rad R1, welches beispielsweise auf eine Zahnstange am Zylinder wirkt, kann der Auslasszylinder 3 bewegt werden. Alternativ lässt sich der Auslasszylinder 3 auch mit mechanischen, pneumatischen oder magnetischen Mitteln betätigen.

Die Kolbenstange 31 weist einen sich in Achsrichtung der Kolbenstange 31 erstreckenden Auslasskanal 36 auf. Der Auslasskanal 36 erstreckt sich dabei über die gesamte Länge der Kolbenstange 31. Zudem weist die Kolbenstange 31 in dem Bereich, welcher in den Kolben 30 einragt, einen Flansch 37 auf. Die Kolbenstange 31 liegt mit dem Flansch 37 auf dem Absatz 34 des Kolbens auf.

Im Auslasskanal 33, zwischen der konischen Ausnehmung 32 und dem Absatz 34, ist zudem ein Rückschlagventil 92 angeordnet. Das Rückschlagventil 92 verhindert, dass das eingebrachte Gas aus der Extraktionskammer 1 ausfliessen kann.

Nach dem Einbringen des Wassers bzw. des Wasserdampfes steigt der Innendruck in der Extraktionskammer an. Sobald die Extraktion beendet ist, wird das Rückschlagventil 92 geöffnet. Das heisst, dass während der Extraktion das Ventil geschlossen ist und einen gewissen Widerstand bietet und nach der Extraktion das Ventil geöffnet wird. Dabei kann das Getränk wie beschrieben aus der Extraktionskammer 1 ausfliessen. Das Rückschlagventil 92 kann in beliebiger Art und Weise betätigt werden. Beispielsweise ist es denkbar, dass das Rückschlagventil 92 mechanisch über die Kolbenstange 31 betätigt wird. Dabei wirkt die Kolbenstange 31 gegen das Rückschlagventil 92. Sobald die Kolbenstange 31 sich vom Rückschlagventil 92 entfernt kann der Innendruck als eine Kraft auf das Rückschlagventil 92 wirken, welche grösser ist, als die gegengerichtete Federkraft des Rückschlagventils 92. Alternativ kann das Rückschlagventil 92 auch als elektrisches oder magnetisches oder pneumatisches Rückschlagventil ausgestaltet sein. In diesem Fall wird das Rückschlagventil durch einen Impuls einer Steuerung betätigt.

Ein Filter 4 ist in der konischen Ausnehmung 32 angeordnet. Der Filter 4 ist trichterförmig und weist ein Gewinde 41 auf, mit welchem der Trichter 4 in den Kolben 31 eingeschraubt werden kann.

Im weiteren ist im oberen Bereich des Kolbens 31 eine Kolbendichtung 5 angeordnet, welche eine Dichtwirkung zwischen Extraktionskammer 1 und Kolben 31 erzielt. Im vorliegenden Ausführungsbeispiel ist die Dichtung ein O-Ring, welcher zwischen dem Filter 4 und einem am Kolben 31 angeordneten Absatz 38 eingeklemmt wird.

An dem Ende der Kolbenstange 31, welches dem Kolben 30 gegenüber ist, ist ein Auslassstück 8 angeordnet. Das Auslassstück 8 ist im wesentlichen zylindrisch ausgestaltet und umfasst eine Auslassöffnung 80. Die Auslassöffnung 80 setzt im wesentlichen den Auslasskanal 36 der Kolbenstange 31 fort. Über diese Auslassöffnung 80 kann das Kaffeegetränk aus der Vorrichtung fliessen.

Um Luft vor dem Extraktionsvorgang in die Extraktionskammer 1 zu bringen, weist das vorliegende Ausführungsbeispiel einen Verdichtungszylinder 6 auf. Der Verdichtungszylinder 6 weist im wesentlichen einen Kolben 60 und eine Kolbenstange 61 auf. Der Kolben 60 gleitet in einem Verdichtungsraum 7, welcher im vorliegenden Ausführungsbeispiel unterhalb der Extraktionskammer 1 angeordnet ist. Der Kolben 60 weist an seiner Aussenwand, welche den gegen den Verdichtungsraum 7 gerichtet ist, vorzugsweise eine Dichtung auf. Der Verdichtungsraum 7 umfasst einen Boden 71 und eine Seitenwand 72 und bildet eine Druckgas liefernde Einrichtung. Durch Drehung an einem schematisch dargestellten Rad R2, welches beispielsweise auf eine Zahnstange am Zylinder wirkt, kann der Verdichtungszylinder 6 bewegt werden. Alternativ lässt sich der Verdichtungszylinder 6 auch mit mechanischen, pneumatischen oder magnetischen Mitteln betätigen.

Der Kolben 60 weist eine Zuführöffnung 62 auf, welche es ermöglicht, dass Luft von der Umgebung durch die Zuführöffnung 62 in den Verdichtungsraum 7 gelangen kann. In der Zuführöffnung 62 ist ein Rückschlagventil 93 angeordnet, welches verhindert, dass beim Kompressionsvorgang Luft durch die Zuführöffnung 62 an die Umgebung abgegeben wird. Der Verdichtungsraum 7 kann über das Rückschlagventil 93 mit Luft versorgt werden. Wird der Zylinder von der eingefahrenen Stellung, also von der Stellung in welcher der Kolben 60 auf dem Boden 70 aufliegt, in die ausgefahrene Stellung bewegt, so wird sich das Rückschlagventil 93 aufgrund des herrschenden Unterdruckes öffnen.

Die Kolbenstange 61 weist im vorliegenden Ausführungsbeispiel den gleichen Aussendruchmesser wie der Kolben 60 auf. Die Kolbenstange 61 weist dabei eine Wandung 64 auf, welche im Verhältnis zum Durchmesser der Kolbenstange eine geringe Dicke aufweist, so dass ein Kolbenraum 65 entsteht.

Aufgrund der Anordnung des Verdichtungsraumes 7 unterhalb der Extraktionskammer 1, weist der Kolben 60 eine Öffnung 63 auf, durch welche die Kolbenstange 31 des Auslasszylinders 3, hindurchragen ragen kann. Das heisst, die Kolbenstange 31 ragt in den Kolbenraum 65 ein.

Über den Gaskanal 20 des Einlasses 2 ist der Verdichtungsraum 7 mit der Extraktionskammer 1 verbunden, so dass die sich im Verdichtungsraum 7 befindliche Luft in die Extraktionskammer eingepresst werden kann.

Figur 2 zeigt alle Teile der Vorrichtung nach dem vorliegenden Ausführungsbeispiel in der Ausgangsstellung vor der Ausführung des erfindungsgemässen Verfahrens.

Nach dem ersten Schritt 100 des Einfüllens des Kaffees in die Extraktionskammer 1 wird der Verdichtungszylinder 6 derart verschoben, dass sich der Verdichtungsraum 7 verkleinert.

Durch die Verschiebung des Verdichtungszylinders 6 wird in einem weiteren nachfolgenden Schritt 101 die Luft bzw. das Gas, welche sich im Verdichtungsraum 7 befinden, über den Gaskanal 20 bzw. über das Rückschlagventil 91 in die Extraktionskammer 1 eingepresst. Je weiter der Kolben 60 in den Verdichtungsraum 7 eindringt, desto höher wird der Druck in der Extraktionskammer 1. Kurz vor dem Erreichen der Endstellung schiebt der Kolben 60 des Verdichtungszylinders 6 den Auslasszylinder 3 in die Extraktionskammer 1 ein. Dadurch wird der Druck in der Extraktionskammer 1 weiter erhöht. Sobald der Kolben 60 am Boden 71 des Verdichtungsraumes 7 ansteht ist der maximale Druck in der Extraktionskammer 1 erreicht.

Falls der Benutzer einen kleineren Druck als der maximale Druck wünscht, muss lediglich der Weg des Verdichtungszylinders 6 begrenzt werden. In diesem Fall würde der Kolben 60 nicht am Boden 71 des Verdichtungsraumes 7 anstehen. Alternativ könnte auch ein durch den Benutzer einstellbares Überdruckventil vorgesehen werden. In diesem Fall kann der Verdichtungszylinder 6 immer so weit bewegt werden, dass der Kolben 60 am Boden 71 des Verdichtungsraumes 7 ansteht.

Sobald der gewünschte Druck in der Extraktionskammer erreicht worden ist, also sobald sich der Kolben 60 in der richtigen Stellung befindet, wird der Druck während der oben beschriebenen Wartezeit in der Extraktionskammer 1 gehalten.

Nach der Wartezeit wird über den Flüssigkeitskanal 20 heisses Wasser oder Wasserdampf in die Extraktionskammer 1 zugefügt. Dabei werden die Aromastoffe aus dem Kaffee extrahiert und das Kaffeegetränk resultiert.

Sobald das Rückschlagventil 92 unterhalb des Filters 4 geöffnet wird, kann das Kaffeegetränk im Schritt 104 aus der Extraktionskammer 1 über den Auslasskanal 33 und 36 ausfliessen.

Das beschriebene Ausführungsbeispiel der Vorrichtung hat exemplarischen Charakter. Das Verfahren gemäss der vorliegenden Erfindung kann auch mit anderen Mitteln oder Vorrichtungen umgesetzt werden.

Beispielsweise ist es denkbar, anstelle der beiden Kolben eine Pumpe einzusetzen, um Luft unter Druck in die Extraktionskammer 1 einströmen zu lassen, so dass sich der Druck in der Extraktionskammer 1 erhöht. Diese Pumpe bildet dann die Druckgas liefernde Einrichtung.

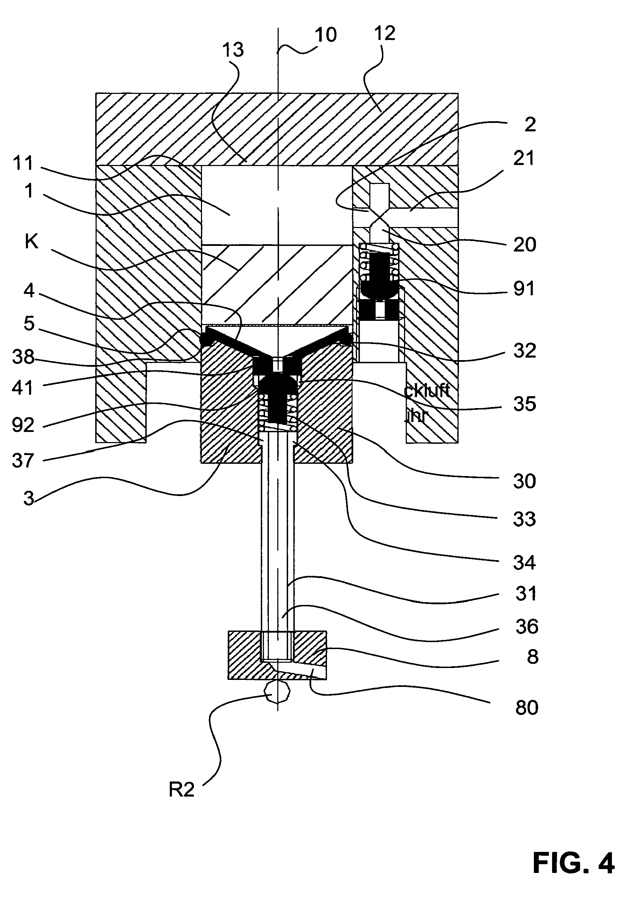

Figuren 4 bis 8 zeigen ein weiteres Ausführungsbeispiel einer Vorrichtung gemäss der vorliegenden Erfindung. Gleiche Teile sind mit gleichen Bezugszeichen versehen. Anstelle des Verdichtungszylinders wird hier Druckluft von einer nicht gezeigte Pumpe oder einer Kartusche als die Druckgas liefernde Einrichtung zugeführt. Die Pumpe kann Umgebungsluft ansaugen und verdichten. Vorzugsweise stellt die Druckgas liefernde Einrichtung einen Druck zwischen 0.1 bar und 12 bar, insbesondere zwischen 0.2 bar und 10 bar, bereit. Die Pumpe kann entsprechend ausgestaltet werden, dass Drücke im genannten Bereich bereitstellbar sind. Falls die Kartusche verwendet wird, herrscht im Innenraum der Kartusche einen Druck, welcher um ein vielfaches höher ist, als die genannten Bereiche. Über einen Druckminderer kann der Druck dann auf den gewünschten Bereich reduziert werden.

Figur 4 zeigt den Auslasszylinder 3 in der unteren Stellung. Vor dem Schliessen des Deckels 12 kann die Extraktionskammer 1 von oben her durch die Öffnung 13 befüllt werden. Befindet sich der Auslasszylinder 3 in der unteren Stellung kann das Volumen der Extraktionskammer 1 als Leervolumen bezeichnet werden. Bei der Befüllung der Extraktionskammer 1 wird soviel Kaffee K eingefüllt, dass dieser rund 40% bis 60% des Leervolumens der Extraktionskammer 1 einnimmt. Der Kaffee K ist durch die schräg verlaufende Schraffur dargestellt.

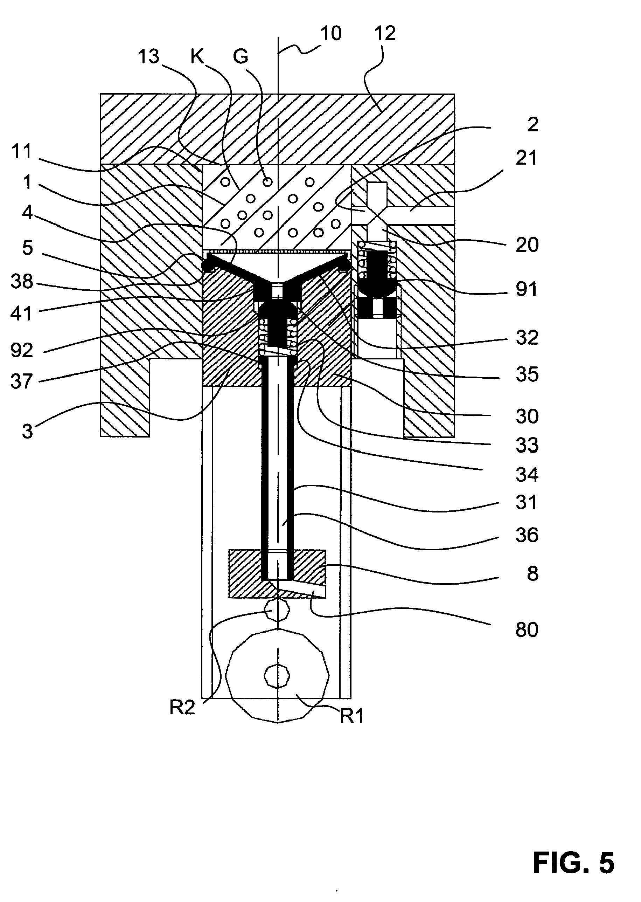

Figur 5 zeigt den Auslasszylinder 3 in seiner oberen Stellung. Hierbei wird das Pulver zusammengepresst bzw. komprimiert. Wobei sich das Leervolumen der Extraktionskammer um 60% bis 40% verringert. Der Grad der Verkleinerung des Leervolumens hängt von der eingefüllten Menge Kaffee und von der Kraft des Auslasszylinders 3 ab.

Anschliessend wird über den Einlass 2 das Gas G über das Rückschlagventil 91 und den Gaskanal 20 in die Extraktionskammer 1 eingebracht. Das Gas G ist als eine Vielzahl von leeren Kreisen schematisch dargestellt. Hierbei erhöht sich der Innendruck P_{I} in der Extraktionskammer 1 um den Partialdruck P_{G} des Gases und es bildet sich eine Mischung aus dem Pulver K und dem Gas G. Hier ist das Gas die aus der Umgebung entnommene Luft.

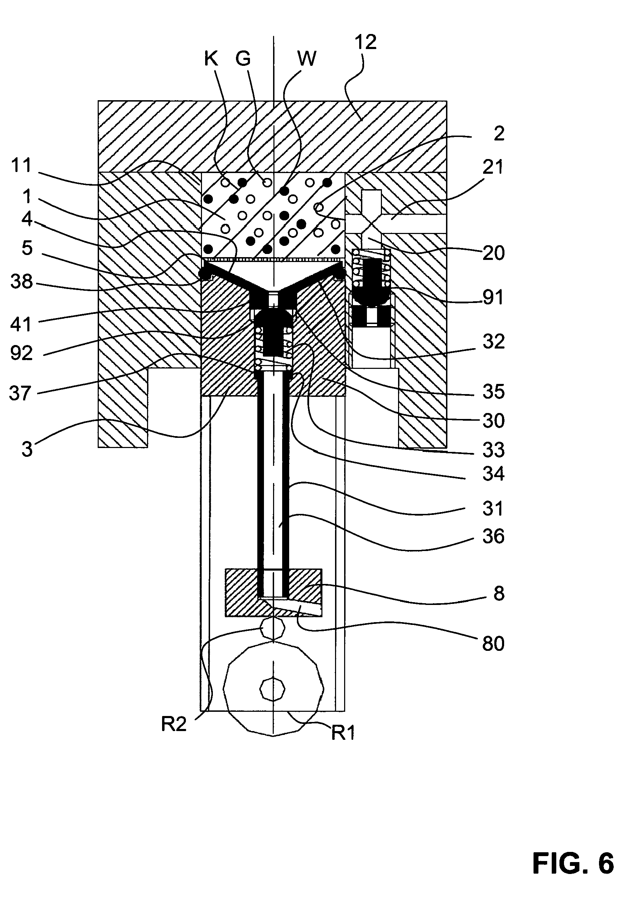

Nach dem optionalen Schritt des Wartens bzw. des Haltens des Innendruckes, wird Wasserdampf W in die Extraktionskammer 1 hinzugefügt. Der Wasserdampf W ist in Fig. 6 als eine Vielzahl von gefüllten Kreisen schematisch dargestellt. Der Innendruck der Extraktionskammer erhöht sich dabei um den Partialdruck des Wasserdampfes P_{W} und es bildet sich eine Mischung aus dem Pulver K, dem Gas G und dem Wasserdampf W.

Falls heisses Wasser in die Extraktionskammer 1 gefüllt wird, so verschiebt sich der Auslasszylinder 3 infolge der Inkompressibilität des Wassers nach unten.

In einem anschliessenden Schritt wird das Rückschlagventil 92 geöffnet und das extrahierte Kaffeegetränk kann ausfliessen. Das Rückschlagventil 92 wird wie oben beschrieben geöffnet.

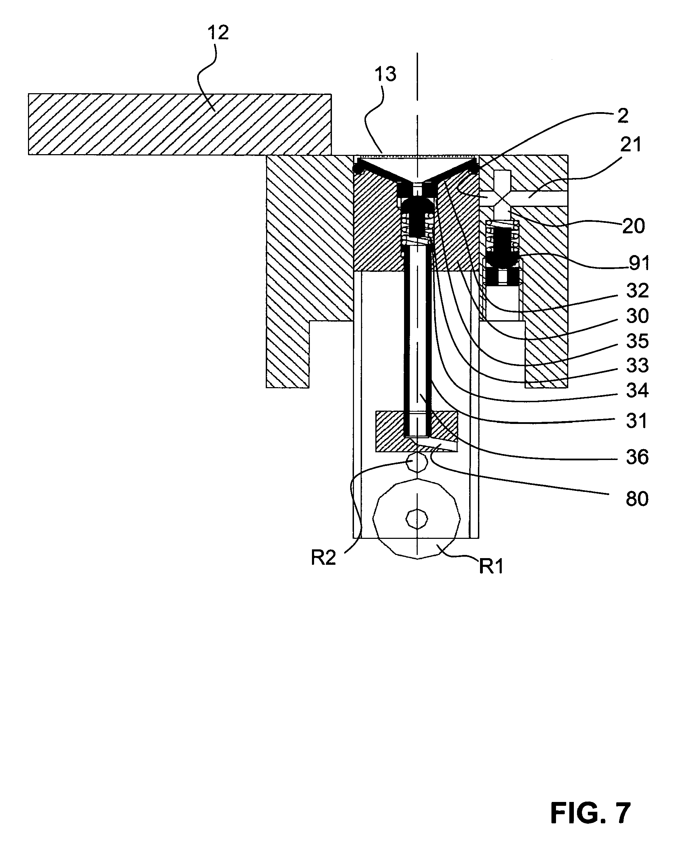

Figur 7 zeigt den Auslasskolben 3 in seiner obersten Position. Zudem ist der Deckel 11, welcher die Extraktionskammer 1 nach oben hin verschliesst, geöffnet. Der in der Kaffeekammer 1 verbleibende Kaffeesatz kann über die Öffnung 13 ausgestossen werden.

Bei den beschriebenen Ausführungsbeispielen sind diverse Steuermittel zur Steuerung der Abläufe nach dem erfindungsgemässen Verfahren vorgesehen. Solche Steuerungsmittel sind dem Fachmann bekannt, weshalb eine Beschreibung davon als überflüssig erachtet wird.

In weiteren Ausführungsbeispielen ist es zudem denkbar, dass sich der Kaffee in einer Kapsel oder einem Sachet befindet. Dabei wird die Kapsel oder das Sachet in der Extraktionskammer platziert. Hierbei müssen Mittel vorgesehen werden, um die Kapsel zu öffnen. Beispielsweise ist es denkbar, zwei Nadeln vorzusehen, welche in die Kapsel einstechen. Über die eine Nadel kann das Gas in die Kapsel und über die andere Nadel kann das Wasser oder der Wasserdampf in die Kapsel geleitet werden.

Es ist im weiteren möglich, eine bekannte handbetätigte Kaffeemaschine, insbesondere eine handbetätigte Kolbenmaschine, bei welcher das Pulver in einen Kolben eingegeben wird, nach dem Verfahren gemäss der vorliegenden Erfindung zu betreiben. Hierbei kann eine bekannte Kolbenmaschine mit Teilen der erfindungsgemässen Vorrichtung ausgerüstet werden.

Im weiteren ist es denkbar, dass eine bekannte Espressomaschine oder Kaffeemaschine, mit der Teilen der oben genannten erfindungsgemässen Vorrichtung ausgerüstet wird, so dass das erfindungsgemässe Verfahren mit einer umgerüsteten Maschine durchgeführt werden kann.

### Bezugszeichenliste

- 1: Extraktionskammer
- 2: Einlass
- 3: Auslasszylinder
- 4: Filter
- 5: Kolbendichtung
- 6: Verdichtungszylinder
- 7: Verdichtungsraum
- 8: Auslassstück
- 10: Mittelachse
- 11: Seitenwand
- 12: Deckel
- 13: Öffnung
- 20: Gaskanal
- 21: Flüssigkeitskanal
- 30: Kolben
- 31: Kolbenstange
- 32: Ausnehmung
- 33: Auslasskanal
- 34: Absatz
- 35: Gewinde
- 36: Auslasskanal
- 37: Flansch
- 38: Absatz
- 41: Gewinde
- 60: Kolben
- 61: Kolbenstange
- 62: Zuführöffnung
- 63: Öffnung
- 64: Wandung
- 65: Kolbenraum
- 70: Boden
- 71: Seitenwand
- 91-93: Rückschlagventile

- 100-106: Verfahrensschritte

- K: Kaffee oder Tee
- G: Gas
- W: Wasser oder Wasserdampf

## Patentansprüche

1. Verfahren zur Herstellung eines Heissgetränkes, insbesondere eines Kaffeegetränks oder eines Teegetränks, wobei Aromastoffe aus einem Aromaträger, der insbesondere aus geröstetem Kaffee oder getrocknetem Tee hergestellt wird, mittels Wasser oder Wasserdampf extrahiert werden, wobei
- in einem ersten Schritt (100) eine vorbestimmte Menge des Aromaträgers, in welchem die Aromastoffe enthalten sind, in eine fluiddicht verschliessbare Extraktionskammer (1) gegeben wird;
- in einem nachfolgenden Schritt (104) Wasser oder Wasserdampf zur Extraktion von Aromastoffen aus dem Aromaträger in die Extraktionskammer (1) gegeben wird;
- in einem nachfolgenden Schritt (106) das extrahierte Getränk aus der Extraktionskammer (1) ausfliesst,
**dadurch gekennzeichnet, dass**
- vor dem Schritt (104) des Einbringens von Wasser oder Wasserdampf in die Extraktionskammer (1), ein Schritt (102) des Einbringens von unter Druck stehendem Gas in die Extraktionskammer (1) ausgeführt wird, um den Innendruck in der Extraktionskammer (1) über den Umgebungsdruck ansteigen zu lassen.

2. Verfahren nach Anspruch 2, **dadurch gekennzeichnet, dass** der Innendruck in der Extraktionskammer nach dem Einbringen des Gases zwischen 0.1 bar und 16 bar, insbesondere zwischen 0.2 und 10 bar, ist.

3. Verfahren nach Anspruch 1 oder 2, **dadurch gekennzeichnet, dass** der durch das Gas bereitgestellte Innendruck in der Extraktionskammer für eine vorbestimmte Wartezeit gehalten wird (102), bevor das Wasser oder der Wasserdampf in die Extraktionskammer eingebracht wird (104).

4. Verfahren nach Anspruch 3, **dadurch gekennzeichnet, dass** die Zeitdauer der Wartezeit zwischen 0.1 und 5 Sekunden lang ist.

5. Verfahren nach einem der vorhergehenden Ansprüche, **dadurch gekennzeichnet, dass** der Innendruck in der Extraktionskammer nach dem Einbringen des Wasserdampfes zwischen 5 bar und 50 bar, insbesondere zwischen 7 und 18 bar, ist.

6. Verfahren nach einem der vorhergehenden Ansprüche, **dadurch gekennzeichnet, dass** der Wasserdampf oder das Wasser in der Extraktionskammer für eine vorbestimmte Wartezeit bzw. Vorbrühzeit gehalten wird (105).

7. Verfahren nach Anspruch 6, **dadurch gekennzeichnet, dass** die Zeitdauer der Vorbrühzeit zwischen 0.1 und 50 Sekunden lang ist.

8. Verfahren nach einem der vorhergehenden Ansprüche, **dadurch gekennzeichnet, dass** der in die Extraktionskammer (1) eingefüllte Aromaträger 40% bis 60% des Leervolumens der Extraktionskammer (1) aufweist.

9. Verfahren nach einem der vorhergehenden Ansprüche, **dadurch gekennzeichnet, dass** der Aromaträger nach dem Einfüllen in die Extraktionskammer (1) unter sein Ausgangsvolumen verdichtet wird.

10. Vorrichtung zur Herstellung eines Heissgetränks, insbesondere eines Kaffeegetränks oder eines Teegetränks, umfassend eine zur Umgebung fluiddicht abschliessbare Extraktionskammer (1) zur Extraktion von Aromastoffen aus einem Aromaträger, der insbesondere aus geröstetem Kaffee oder getrocknetem Tee hergestellt wird, mittels Wasser oder Wasserdampf, und einen Filter (4) zur Filterung des durch die Extraktion entstehenden Getränks, **dadurch gekennzeichnet, dass** eine Druckgas liefernde Einrichtung vorgesehen ist, mit der ein unter Druck stehendes Gas in die mit dem Aromaträger befüllte Extraktionskammer (1) einleitbar ist.

11. Vorrichtung nach Anspruch 10, **dadurch gekennzeichnet, dass** die Druckgas liefernde Einrichtung eine Pumpe oder eine oder mehrere Druckgaszylinder sind.

12. Vorrichtung nach einem der Ansprüche 9 bis 11, **dadurch gekennzeichnet, dass** das durch die Druckgas liefernde Einrichtung abgebbare Gas ein Intergas, wie beispielsweise Kohlenstoffdioxid (CO₂) oder Stickstoff (N₂), oder Luft ist.
